# EUROPEAN PATENT APPLICATION

(11) **EP 0 742 454 A2**
(43) Date of publication of application: **13.11.1996**
(21) Application number: 96107411.9
(22) Date of filing: 09.05.1996
(51) Int. Cl.: G02B 5/08

(54) **Improvements in or relating to front projection screens and the like**

(30) Priority: 12.05.1995 GB 9509615
(71) Applicant: NASHUA CORPORATION, Nashua, NH 03061 (US); NASHUA PHOTO LIMITED, Newton Abbot, Devon TG12 4PB (GB)
(72) Inventor: Clabburn, Robin, Sevenhampton, Wiltshire SN6 7QA (GB); Langille, William, Amherst, New Hampshire 03031 (US)
(74) Representative: Howden, Christopher Andrew

(57) **Abstract**

A material suitable for a front projection screen comprising a layer or film of light diffusing material and, juxtaposed therewith, a reflective layer, and wherein there is provided, in the region of the interface between the light-diffusing and the reflective materials, at least one textured surface.

## Description

THIS INVENTION relates to a material suitable for use as a front projection screen and for analogous purposes, such as in reflective signs, etc.

It is well known that the important parameters of a material for such purposes include brightness, that is the amount of incident light "reflected" back to the viewer and the angles from the perpendicular to the surface of the material over which an acceptable brightness level (usually in excess of 50% of the maximum) is maintained.

In the following, reference is made to the "angle of view". In this specification, the term "angle of view" refers to the range of viewing angles of observers relative to a diffusing screen or a rear projection screen over which the apparent brightness of the screen is within 50% or more of the apparent brightness to an observer viewing the screen at right angles assuming that the light incident on the screen is incident along the normal to the screen. This figure is often referred to as "full width half maximum" or "fwhm". In the examples set out below, the angle of view was measured by illuminating a small area of the screen material by a laser beam (although some other collimated light beam may be used) directed normally to the plane of the screen and measuring the light reflected from that small area over a range of angles. Furthermore, in the following, the expression "angle of view for transmission" means "angle of view" defined as above for a screen of light-diffusing material illuminated by a projector or the like disposed on the opposite side of the plane of the screen from the observer, i.e. for a rear-projection screen whilst the expression "angle of view for reflection" means "angle of view" defined as above for a screen of light reflective material illuminated by a projector or the like disposed on the same side of the plane of the screen as the observer, i.e. for a front projection screen.

Established methods for producing materials suitable for front projection screens and for analogous purposes include, on the one hand, the lamination of light diffusing films to specular or "mirror like" surfaces and, on the other hand, incorporating geometric features into such surfaces, for example corner cube arrays. Where a light diffusing material is laminated to a mirror-like surface, the angle of view for reflection is approximately double the angle of view for transmission for small to moderate angles of view. With a front projection screen produced by incorporating geometric features in a reflective surface the angle of view is determined by the geometry of such features. Where a light-diffusing material is laminated to a reflective surface, increases in angle of view to achieve appropriate reflective characteristics may be impossible or may be obtainable only to the detriment of one other important factor such as brightness (reduced if film thickness is increased), flexibility or cost. Where reflective diffusion is obtained by providing an array of geometric features, the angle of view can only be changed by changing the geometric features. The geometric features can only be changed by changing the mould, press tools or other tools used to produce these features, and this is expensive.

It is an object of the invention in one of its aspects to provide an improved material suitable for use as a front projection screen or in reflective signs or in analogous applications.

According to this aspect of the invention there is provided a material suitable for a front projection screen, comprising a layer or film of light diffusing material and, juxtaposed therewith, a reflective layer, and wherein there is provided, in the region of the interface between the light-diffusing and the reflective materials, at least one textured surface.

Thus, a significant factor in preferred embodiments of the invention to be described is the creation of a texture at the interface between the reflective and transmissive materials, both in respect of angle of view and of asymmetry. If the texture is completely random, for example a "satin" finish, angle of view can be increased by increased roughness. If the texture is oriented (although preferably still being in other respects of a random character) for example a "brushed" finish, asymmetry is achieved. A distinction must be drawn between random textures, such as satin or brushed finishes, and organised or "engineered" textures or interfaces, for example, where an interface surface is configured as a Fresnel lens or mirror or is provided with a geometric pattern of parallel ribs (e.g. a grating) or has a "knurled" or the like pattern. The applicants have found that random textures avoid Moiré and similar effects which can be encountered using more organised textures.

In a preferred embodiment of the invention, a film or layer of light-diffusing plastics material is bonded to a metallic foil, e.g. aluminium foil, having presented towards said plastics material a textured surface, for example a satin finish surface or brushed surface. Such a surface is characterised, on the microscopic scale, by a mass of surface irregularities. These surface irregularities may comprise fine scratches. In this case the scratches may be randomly oriented, and thus intersecting each other without any preferential orientation of such scratches. Such a foil is herein referred to, for convenience, as symmetrical.

Alternatively, the orientation of the scratches may be asymmetrical in the sense that a major part of the scratches, at least, may be oriented within a limited range of angles relative to a preferred direction in the plane of the film, as is the case generally in a material having a "brushed" finish. In this case, the scratches may all, or substantially all, extend in the same direction and thus parallel with one another, or may be less than totally aligned so that some intersect others but with the number of scratches aligned along a given direction falling away with increasing angular displacement of such given direction from a preferred direction, reaching a minimum for a direction perpendicular to the preferred direction.

The textured surface, in embodiments of the invention, may optionally be a surface of the light transmissive, diffusing layer or film, or a surface of the reflective layer, or both the surface of the light diffusing layer or film adjoining the reflective layer and the surface of the reflective layer adjoining the light diffusing layer or film may be textured. If desired, the surface of the light diffusing layer or film remote from the reflective layer may also be textured.

A reflecting foil with the appropriate surface character may be bonded to the light diffusing material using a transparent adhesive. Alternatively, the light diffusing material may be extruded or otherwise applied as a coating to the surface of the foil. Where the light diffusing material is photopolymer based, the appropriate light diffusing characteristic may be created after the coating process in the manner described in EP 0294122. That is to say, the surface of the foil may be coated with the photopolymerisable monomer or other precursor of the photopolymer, and the resulting coating or layer of that photopolymerisable material may be selectively exposed to polymerising light in the manner described in EP 0294122.

In preferred embodiments of the invention, the light-diffusing layer or film is of a type in which diffusion is brought about by refractive index differences within the film itself which in turn may be further modified by incorporating surface relief features. Refractive index differences of the "step index" type, where sharp changes in refractive index exist within the material may be produced as described in U.S. Patent 5307205, whereas materials of the "graded refractive index" type in which the refractive index changes are more gradual may be produced as described in European Patent EP 294122. The invention may also be applied to light diffusing layers or films having surface relief features or texturing accounting partly or wholly for the light diffusing properties of the layer or film, and to such layers or films where the surface relief or texturing is deliberately induced or applied by any technique, as well as to such layers or films where the surface relief or texturing arises naturally or as a by-product of some other process. Techniques by which surface relief or texturing may be deliberately induced include, for example moulding or embossing or extruding such layers or films using randomly "roughened" die openings or random variations in extrusion conditions. Such techniques may be used to induce oriented texturing, where surface features are extended or elongate along a preferred direction in the layer or film, whilst still remaining random, as well as non-oriented texturing. Techniques producing surface relief or texturing as a by-product include, for example, techniques where selective photopolymerisation of certain photopolymerisable monomers produces a surface relief or texturing effect. Again, such texturing may be oriented or non-oriented.

In the following examples, sheet material suitable for use as a front projection screen, i.e. a screen onto which a real optical image can be projected by means of a suitable projector for viewing by one or more individuals, is manufactured as follows.

In the following examples, a light-diffusing plastics material, of the kind supplied under the Registered Trade Mark "Plexiglas-L" by Rohm and Haas Company, Philadelphia, U.S.A. was used. This material comprises a polymethyl methacrylate matrix in which is embedded a plurality of small substantially spherical particles of different refractive index from the matrix. Such light diffusing materials are disclosed in, *inter alia*, U.S. Patent No. 5307205 and U.S. Patent No. 3751527.

### EXAMPLE 1

"Plexiglas-L" material was extruded to form light diffusing sheet material 0.005 inch in thickness with an angle of view, for transmission, of 17 degrees (full width half maximum). The light diffusing sheet material was symmetrical as regards its light diffusing properties, i.e. it had no tendency to spread light more in any direction more than any other direction, that is to say, its angle of view was the same in all planes perpendicular to the plane of the material. One piece of this "Plexiglas-L" sheet material was laminated to aluminium foil having a polished (mirror-like) finish to form screen 1, another piece of this "Plexiglas-L" sheet material was laminated to aluminium foil having a "satin" finish without a directional character to form screen 2 and a further piece of this "Plexiglas-L" sheet material was laminated to aluminium foil having a "brushed" finish which clearly had a "directional" texture to form screen 3. The angles of view of the three reflective screens thus produced were measured in two perpendicular directions and compared as follows:

| | | Angles of View | |
|---|---|---|---|
| | Surface Texture | Direction of Texture | Perpendicular Direction |
| Screen 1 | None (mirror finish) | 35° | 35° |
| Screen 2 | Satin (random) | 40° | 40° |
| Screen 3 | Brushed (directional) | 35° | 60° |

These results demonstrate that choice of surface texture can provide both increases in angle of view and asymmetry.

### EXAMPLE 2

Plexiglas-L material was extruded to a thickness of 0.010 inches and during the experiment extrusion conditions were modified to modify surface roughness. Roughness is measured with a profilometer in micro-inches. To create a reflective screen, aluminium was vapour deposited onto the surface with modified surface roughness and the angle of view was measured.

| Sample | Surface Roughness µ in | Angle of View |
|---|---|---|
| 1 | 0 | 35° (from 1 above) |
| 2 | 3 | 46° |
| 3 | 14 | 66° |

This result again demonstrates that tailoring the interface between reflecting and transmissive materials enables angle of view to be adjusted in a preferred manner.

As indicated in the above table, the composite laminate of screen 3 had markedly asymmetrical light reflecting properties, having a greater angle of view in a plane perpendicular to the preferred orientation of the minute scratches, on the foil, affording the "brushed" effect than in the perpendicular direction.

The Applicants believe that if the same procedure is followed as in Example 1 but using an asymmetrical light diffusing sheet material, for example produced by orienting "Plexiglas-L" material by controlling the extrusion conditions whereby orientation is introduced into the material during haul off, it will be possible to produce a screen material having asymmetrical diffuse reflection characteristics by laminating such light diffusing sheet material with aluminium foil with either a mirror-like or a satin finish.

It is also believed that subject to appropriate relative positions of the oriented sheet material and the foil it will be possible to produce an enhanced asymmetry in the diffusion material/foil combination. Thus, it is anticipated that where such an oriented sheet material is laminated to a metal foil having a "brushed" or other "directional" surface finish, and the direction of orientation in the light diffusing sheet material is the same as the preferred orientation of the scratches defining the "brushed" surface texture of the metal foil, an enhanced angle of view as compared with Screen 3 in Example 1 will be obtained, in a direction perpendicular to said direction of orientation, and with an enhanced asymmetry, the angle of view in a perpendicular sense being substantially smaller. It is further anticipated that where the direction of stretching or orientation in the light diffusing sheet material is perpendicular to the preferred orientation of the scratches forming the "brushing", there will be a reduced asymmetry or no asymmetry but an increased angle of view or increased average angle of view. Thus, it is believed possible simply by selecting an appropriate angle between the orientation direction of the light diffusing sheet material and the scratches defining the "brushed" effect of the foil, to tailor the angle of view and the asymmetry to suit particular requirements.

Our co-pending U.K. Patent Application No. 9500025.3 discloses this and other techniques for producing oriented or asymmetrical light diffusing materials which may be combined with reflective surfaces of layers to provide material in accordance with the present invention suitable for front projection screens and the like.

It will be appreciated that instead of bonding the sheet plastics material to the foil, the plastics material may be cast or extruded directly onto the foil so as to be bonded thereto by the adhesive properties of the matter or plasticised plastics. Alternatively, a light diffusing material may be formed initially with a textured surface, or treated to provide such a textured surface and the reflective layer may be applied to this textured surface by a particle deposition process, for example a reflective metal layer may be applied to said textured surface by a sputtering, vapour deposition or vacuum deposition technique. Our co-pending U.K. Patent Application No. 9502563.1 discloses various techniques of this kind in greater detail.

It is also contemplated that a further variant front projection screen may be produced by the same procedures as were used as in Example 1 but using, instead of sheet material formed by extruding "Plexiglas-L", a light diffusing sheet material formed by the techniques disclosed in EP-0294122. This material comprises a photopolymer in which an array of graded refractive index lenses has been formed by selective photopolymerisation, as described in more detail in EP-0294122. WO94/29768 discloses improved techniques for forming such a light diffusing material. The light diffusing sheet material used in this case may be that supplied by Nashua Corporation under the Registered Trade Mark "MICROSHARP".

It will be appreciated that in the above-noted examples, instead of brushed or satin finished foil, other reflective materials affording the same effect may be used, for example suitably treated or configured reflective plastics foil.

The following example utilises such "MICROSHARP" material.

### EXAMPLE 3

MICROSHARP material was used in which, more particularly, the layer of photopolymer incorporating the graded refractive index lenses is supported upon a smooth layer of polyester film, the opposite and exposed surface of the photopolymer layer being relief textured as a result of the corresponding surface of the monomeric precursor of the photopolymer having been left free to adopt such texturing during selective exposure to polymerising light and/or during subsequent polymerisation, for example by using an optical mask, in contact with the monomer, which itself incorporates complementary surface relief on its side contacting the monomer and with the optical mask being subsequently separated from the photopolymer. Reflective screens were made by depositing (for example by vapour deposition) onto the MICROSHARP product referred to above. In one instance the reflective material was deposited upon the smooth (polyester film) side of the MICROSHARP product and in another instance the reflective material was deposited upon the textured surface of the MICROSHARP product. The table below sets out the angles of view (as herein defined) obtained
(a) for the MICROSHARP product, without reflective coating as a transmissive diffusion screen;
(b) with the smooth surface reflectively coated and
(c) with the textured surface reflectively coated.

- Transmissive diffuser: Angle of view = 22°
- Smooth side coated: Angle of view = 40°
- Textured side coated: Angle of view = 48°

### EXAMPLE 4

The procedures set out in Example 3 above were repeated but using MICROSHARP material in which the graded refractive index lenses and the corresponding surface features of the textured surface are preferentially elongate in a particular direction in the plane of the material (herein referred to as the principal direction) resulting in a light diffusing material with asymmetric characteristics. The following results were obtained.
- Transmissive diffuser: Angle of view = 25° (principal direction)
Angle of view = 39° (perpendicular direction)
- Smooth side coated: Angle of view = 45° (principal direction)
Angle of view = 65° (perpendicular direction)
- Textured side coated: Angle of view = 55° (principal direction)
Angle of view = 74° (perpendicular direction)

The applicants have concluded that in the combinations of light reflective and light transmissive materials considered above, and of utility in front projection screens and like applications, the region of transition from the transmissive to the reflective material, herein referred to as the interface between said materials is of substantial significance and from this viewpoint a textured reflective surface juxtaposed with a plain transmissive surface, a textured transmissive surface juxtaposed with a smooth reflective surface, a contoured surface of intimate contact between transmissive and reflective materials and a textured transmissive surface juxtaposed with a textured reflective surface may all serve the same purpose and informed selection of these options, and of the type or types of surface texturing involved allows the design of screen materials optimally "tailored" to particular requirements.

The features disclosed in the foregoing description, in the following claims and/or in the accompanying drawings may, both separately and in any combination thereof, be material for realising the invention in diverse forms thereof.

## Claims

1. A material suitable for a front projection screen comprising a layer or film of light diffusing material and, juxtaposed therewith, a reflective layer, and wherein there is provided, in the region of the interface between the light-diffusing and the reflective materials, at least one textured surface.

2. A material according to claim 1 wherein at least one said textured surface has a random texturing.

3. A material according to claim 1 or claim 2 wherein at least one said textured surface has an oriented texturing with features which are extended or elongate along a preferred direction in the plane of said interface.

4. A material according to any of claims 1 to 3, comprising a layer or film of light diffusing material having bonded to one side thereof a reflective layer having, presented towards said light diffusing material, a textured reflective surface.

5. A material according to any of claims 1 to 3, having asymmetrical diffusion characteristics as herein defined, comprising a layer or film of light-diffusing material having bonded to one side thereof a reflective layer having, presented towards said light-diffusing material, a reflective surface having a brushed or other texture characterised by linear irregularities extending preferentially in one direction.

6. A material according to claim 4 or claim 5 wherein said reflective layer comprises a brushed or satin finish aluminium foil.

7. A material according to any of claims 1 to 3 comprising a layer or film of light-diffusing material having, adjoining said reflective layer a textured surface of said light-diffusing material, and wherein said reflective layer has been applied by a particle deposition process and thus has a surface, adjoining said light-diffusing material, which conforms closely with the textured surface of the light-diffusing material.

8. A material according to any of claims 4 to 7 wherein said light-diffusing material comprises particles of a first refractive index embedded in a matrix of a different refractive index.

9. A material according to any preceding claim wherein said light-diffusing material comprises light-scattering particles in a light-transmitting matrix.

10. A method according to any of claims 1 to 8 wherein said light-diffusing material comprises a layer or film of a photopolymer incorporating an array of graded refractive index lenses formed by selective exposure of the corresponding monomer to polymerising light.

11. A method according to claim 10 wherein a said textured surface is provided by said photopolymer and has been formed by leaving the corresponding said surface of the precursor of the photopolymer free to adopt a surface texturing or surface relief during selective polymerisation corresponding to and consequent upon such selective exposure to polymerising light.

12. A material according to any preceding claim, wherein said light diffusing material is one having asymmetrical light diffusing characteristics, whereby the coated material has similarly asymmetrical light reflective characteristics.
